# EUROPÄISCHE PATENTSCHRIFT

(11) **EP 3 887 131 B1**
(45) Veröffentlichungstag und Bekanntmachung des Hinweises auf die Patenterteilung: **04.06.2025**
(21) Anmeldenummer: 19809451.8
(22) Anmeldetag: 25.11.2019
(51) Int. Cl.: B29C 65/48, B29C 65/00, B32B 37/14, B32B 38/00, F03D 1/06, B29L 31/08

(54) **ROTORBLATTKOMPONENTE, VERFAHREN ZU DEREN HERSTELLUNG UND WINDENERGIEANLAGE**
ROTOR BLADE COMPONENT, METHOD FOR PRODUCING SAME, AND WIND TURBINE
COMPOSANT DE PALE DE ROTOR, SON PROCÉDÉ DE FABRICATION ET ÉOLIENNE

(30) Priorität: 28.11.2018 DE 102018009338
(43) Veröffentlichungstag der Anmeldung: 06.10.2021
(73) Patentinhaber: Siemens Gamesa Renewable Energy Service GmbH, 20097 Hamburg (DE)
(72) Erfinder: EYB, Enno, 24116 Kiel (DE)
(74) Vertreter: Schlotter, Alexander Carolus Paul
(86) Internationale Anmeldenummer: PCT/EP2019/082397
(87) Internationale Veröffentlichungsnummer: WO 2020/109218

(56) Entgegenhaltungen:
- EP-A1- 3 026 259
- EP-A2- 2 778 393
- EP-B1- 3 884 157
- CN-A- 103 817 955

## Beschreibung

Die Erfindung betrifft ein Verfahren zum Herstellen einer Rotorblattkomponente, insbesondere eines Rotorblattgurts, für ein Rotorblatt einer Windenergieanlage, eine Rotorblattkomponente sowie eine Windenergieanlage mit einer solchen Rotorblattkomponente.

Rotorblätter für Windenergieanlagen werden häufig aus zwei separat voneinander hergestellten Rotorblattschalen zusammengesetzt. Dabei können im Inneren des Rotorblattes ein oder mehrere Gurte vorgesehen sein, welche im Wesentlichen entlang einer Längsachse des Rotorblatts von der Rotorblattwurzel zur Rotorblattspitze verlaufen und zusätzlich Stabilität verleihen bzw. die elastischen Eigenschaften des Rotorblatts beeinflussen.

Solche Gurte werden im Allgemeinen unter Verwendung von Strangziehverfahren (Pultrusionsverfahren) hergestellt, wobei z.B. einzelne pultrudierte Lagen aus einem Fasermaterial, z.B. Kohlefaser, zum Gurt geschichtet und miteinander verbunden werden. Um das Risiko eines Ablösens des Endes einer Lage von der darunter liegenden Lage zu verringern, ist es bekannt, die Enden der Lagen z.B. durch Fräsen, Schleifen oder Sägen abzuschrägen und so die Dicke am Ende der Lage zu verringern und somit einen kontinuierlichen Kraftfluss zwischen der endenden Lage und der darunterliegenden Lage zu gewährleisten. Aus technischen Gründen ist es hierbei allerdings nur schwer möglich, die Dicke am Ende der Lage beim Abschrägen auf Null zu reduzieren. Somit bleibt eine Restdicke bestehen, weshalb im Allgemeinen auch ein Restrisiko eines Ablösens verbleibt.

EP2778393 A2 offenbart ein Windturbinenblatt, das aus einer ersten und einer zweiten Halbschale gebildet wird, wobei jede Halbschale u.a. eine Holmkappe aufweist, die eine Vielzahl von gestapelten, pultrudierten Lagen umfasst, die in einer Sehnenrichtung flach sind und deren Enden sich verjüngen, um Spannungskonzentrationen in jeder einzelnen Lage zu verringern.

EP3026259 A1 offenbart Verfahren zur Herstellung von Holmkappen für ein Rotorblatt einer Windenergieanlage. Das Verfahren umfasst die Bereitstellung einer Vielzahl von Pultrusionsprofilen, die aus einer oder mehreren Fasern oder Faserbündeln bestehen, die durch ein Harzmaterial ausgehärtet sind. Ein weiterer Schritt besteht darin, die Enden der Pultrusionsprofile in einem vorbestimmten Winkel zu verjüngen. Das Verfahren umfasst auch das Anordnen der sich verjüngenden Pultrusionen in einer Form der Holmkappe. Das Verfahren pe zu bilden.

CN103817955 A offenbart ein Herstellungsverfahren für eine Holmkappe aus Verbundwerkstoff für Windturbinenblätter. Für die Hauptholmkappen, die für 50 m lange Windturbinenblätter verwendet werden, wird die Anzahl der Lagen in der Regel entsprechend dem Produktspezifikationsplan für die Windturbinenblätter festgelegt, z.B. 65 Faserschichten. Die Faserlänge der Lagen wird entsprechend der Länge des Windturbinenblattes in Übereinstimmung mit den Konstruktionsanforderungen an die Hauptholmkappe festgelegt, wobei die Faserlänge jeder Lage im Allgemeinen unterschiedlich ist. Es ist eine Aufgabe der Erfindung, eine verbesserte Rotorblattkomponente bereitzustellen, insbesondere die Belastbarkeit einer Rotorblattkomponente zu erhöhen.

Diese Aufgabe wird durch ein Verfahren zur Herstellung einer Rotorblattkomponente nach Anspruch 1, eine Rotorblattkomponente nach Anspruch 9, sowie eine Windenergieanlage gemäß den unabhängigen Ansprüchen gelöst.

Gemäß einem ersten Aspekt der Erfindung wird bei einem Verfahren zum Herstellen einer Rotorblattkomponente, insbesondere eines Rotorblattgurts, für ein Rotorblatt einer Windenergieanlage ein Schichtsystem aus einer ersten Schicht aus einem ersten Material und einer zweiten Schicht aus einem zweiten Material hergestellt. Dabei weist das zweite Material einen kleineren Elastizitätsmodul auf als das erste Material, und die zweite Schicht erstreckt sich zumindest abschnittsweise entlang der ersten Schicht. Das Schichtsystem wird an mindestens einem Ende mithilfe wenigstens eines Trennverfahrens in der Weise abgeschrägt, dass die zweite Schicht an dem mindestens einen Ende des Schichtsystems über die erste Schicht hinausragt. Zudem wird das Schichtsystem mit wenigstens einem weiteren solchen Schichtsystem zur Rotorblattkomponente verbunden.

Gemäß einem zweiten Aspekt der Erfindung weist eine, vorzugsweise mit dem Verfahren nach dem ersten Aspekt der Erfindung hergestellte, Rotorblattkomponente, insbesondere Rotorblattgurt, für ein Rotorblatt einer Windenergieanlage wenigstens ein Schichtsystem aus einer ersten Schicht aus einem ersten Material und einer zweiten Schicht aus einem zweiten Material auf. Die zweite Schicht ist dabei zumindest abschnittsweise auf der ersten Schicht aufgebracht und das zweite Material weist einen kleineren Elastizitätsmodul auf als das erste Material. Zudem ist das Schichtsystem an mindestens einem Ende in der Weise abgeschrägt, dass die zweite Schicht an dem mindestens einen Ende des Schichtsystems über die erste Schicht hinausragt. Die Rotorblattkomponente weist des Weiteren wenigstens ein weiteres solches Schichtsystem auf, mit welchem das wenigstens eine Schichtsystem zur Rotorblattkomponente verbunden ist.

Gemäß einem dritten Aspekt der Erfindung weist eine Windenergieanlage mindestens ein Rotorblatt auf, welches eine mit dem Verfahren nach dem ersten Aspekt der Erfindung hergestellte Rotorblattkomponente und/oder eine Rotorblattkomponente nach dem zweiten Aspekt der Erfindung aufweist.

Vorzugsweise werden bzw. sind solche Schichtsysteme derart miteinander verbunden, dass die zweite Schicht eines ersten Schichtsystems im Bereich ihres mindestens einen abgeschrägten Endes, insbesondere vollständig, auf der ersten Schicht eines zweiten Schichtsystems aufliegt und/oder die zweite Schicht eines ersten Schichtsystems im Bereich ihres mindestens einen abgeschrägten Endes der ersten Schicht eines zweiten Schichtsystems zugewandt ist. Die zweite Schicht des ersten Schichtsystems kann hierbei direkt auf der ersten Schicht des zweiten Schichtsystems aufliegen. Alternativ kann aber auch mindestens eine weitere Schicht, etwa eine Kleberschicht und/oder eine Schicht aus dünnem Vlies bzw. aus mit Harz getränktem Fasermaterial, zwischen der zweiten Schicht des ersten Schichtsystems und der ersten Schicht des zweiten Schichtsystems liegen.

Bevorzugte Aspekte der Erfindung basieren auf dem Ansatz, eine Rotorblattkomponente wie beispielsweise einen Rotorblattgurt aus mehreren Schichtsystemen herzustellen, wobei vorzugsweise jedes Schichtsystem die Form eines Schichtverbunds hat und eine erste Schicht aus einem ersten Material sowie eine zweite Schicht aus einem zweiten Material aufweist. Dabei weist das zweite Material einen kleineren Elastizitätsmodul auf das erste Material, so dass die Steifigkeit der zweiten Schicht geringer ist als die Steifigkeit der ersten Schicht, selbst wenn die beiden Schichten die gleiche Dicke aufweisen.

Die Schichtsysteme können jeweils an mindestens einem Ende abgeschrägt werden, so dass an dem mindestens einen Ende die zweite Schicht jeweils über die erste Schicht hinausragt. Durch Abschrägen des Schichtsystems am mindestens einen Ende, was auch als Schäften des Schichtsystems bezeichnet werden kann, wird eine Endfläche des Schichtsystems, insbesondere der ersten Schicht, erzeugt. Die Endfläche ist dabei gegenüber einer Kontaktfläche zwischen der ersten und zweiten Schicht geneigt, insbesondere so dass die erste Schicht keilförmig endet bzw. die Dicke am Ende der ersten Schicht gegen Null geht. Beim Zusammenfügen mehrerer solcher Schichtsysteme ergibt sich somit in bevorzugter Weise ein pyramidenartiger Stapel mit hoher Tragfähigkeit, da Steifigkeitssprünge an den Enden der ersten Schichten vermieden werden können und das Risiko eines Ablösens verringert wird. Vorzugsweise werden die Schichtsysteme in der Weise miteinander verbunden, dass die zweiten Schichten den ersten Schichten des jeweils darunter liegenden Schichtsystems zugewandt sind.

Da die Steifigkeit des Schichtsystems im Bereich der zweiten Schicht reduziert ist, können Steifigkeitssprünge zwischen den einzelnen Schichtsystemen bzw. in der Rotorblattkomponente und somit das Risiko eines Ablösens der einzelnen Schichtsysteme voneinander verringert werden. Gleichzeitig hat die kleinere Steifigkeit der zweiten Schicht auch Auswirkungen auf den möglichen Abschrägwinkel, unter dem ein Teil des Schichtsystems, insbesondere der ersten Schicht, z.B. durch Fräsen, Schneiden, Schleifen oder Sägen abgetrennt wird. Z.B. kann der Abschrägwinkel durch die zweite Schicht mit geringerer Steifigkeit größer als bei konventionellen Lagen von Rotorblattkomponenten gewählt und somit die Kosten für die Herstellung der Schäftungen reduziert werden. Außerdem können die Enden der einzelnen Schichtsysteme näher beieinander liegen. Es ist etwa denkbar, das mindestens eine Ende des Schichtsystemes derart abzuschrägen, dass das mindestens eine Ende eine mit dem Abschrägwinkel korrespondierende Steigung zwischen 1:50 und 1:200, insbesondere im Wesentlichen 1:80, relativ zur Kontaktfläche zwischen erster und zweiter Schicht aufweist.

Ein Schichtsystem kann beispielsweise aus stranggezogenen bzw. pultrudierten Kohlefasern, welche die erste Schicht bilden, und einem Glasfasergelege, welches die zweite Schicht bildet, gebildet werden. Beim Abschrägen des wenigstens einen Endes des Schichtsystems wird dann in bevorzugter Weise zumindest eine Kante der Kohlefaserschicht abgetrennt, so dass sich die Kohlefaserschicht zum Ende hin verjüngt, insbesondere unter dem Abschrägwinkel spitz bzw. keilförmig zuläuft. Gegebenenfalls kann beim Abschrägen auch zumindest eine Kante des Glasfasergeleges abgetrennt werden, so dass sich auch das Glasfasergelege zum Ende hin verjüngt, wodurch die Steifigkeit der zweiten Schicht zum Ende hin weiter reduziert werden kann.

Insgesamt wird durch die Erfindung das Herstellen von Rotorblättern verbessert und eine entsprechende Windenergieanlage angegeben.

In einer bevorzugten Ausführungsform wird das Schichtsystem hergestellt, indem die zweite Schicht aus dem zweiten Material beim Fertigen der ersten Schicht aus dem ersten Material mit der ersten Schicht verbunden wird. Beispielsweise kann die erste Schicht auf der zweiten Schicht oder zumindest abschnittsweise um die zweite Schicht herum gefertigt werden. Es ist etwa denkbar, dass das erste Material in einem Strangziehverfahren pultrudiert und dabei vorzugsweise auf der zweiten Schicht und/oder um die zweite Schicht herum abgelegt wird. Dadurch kann das Schichtsystem in besonders wenigen Arbeitsschritten hergestellt werden. Insbesondere kann somit auch eine besonders feste Verbindung zwischen der ersten und zweiten Schicht hergestellt werden.

Insbesondere kann die zweite Schicht beim Fertigen der ersten Schicht aus dem ersten Material in die erste Schicht bzw. in eine Teilschicht des ersten Materials eingearbeitet werden. Es ist beispielsweise vorteilhaft, wenn das zweite Material, z.B. als Glasfasergelege oder Glasfaserbündel (sog. Rovinge), bei der Herstellung der ersten Schicht bereits als zweite Schicht eingebracht wird. Dadurch können sich die Faserbündel sowie Fasergelege mit der ersten Schicht zuverlässig verbinden, wobei die Kontaktfläche zwischen den Faserbündeln oder -gelegen und der ersten Schicht uneben sein kann. Insbesondere kann sich somit beim Abschrägen des mindestens einen Endes ein unregelmäßiger, vorzugsweise kontinuierlicher Übergang zwischen der ersten und zweiten Schicht ergeben. Dies ist besonders bevorzugt, da somit die Bildung einer Rissfront und somit das Ablösen bei hohen Längsbelastungen verzögert werden kann.

Das Einbringen von Faserbündeln hat, insbesondere gegenüber Gelegen, den Vorteil, dass die Faserbündel auch an den seitlichen, entlang der Längsrichtung verlaufenden Rändern der ersten Schicht eingebracht werden können. In besonders bevorzugter Weise werden beim Herstellen der ersten Schicht Faserbündel (Rovinge) in der Weise eingebracht, dass zumindest ein Teil der ersten Schicht seitlich von den Faserbündeln eingefasst ist. Gegebenenfalls können die eingebrachten Faserbündel auch ein Fasergelege mit einfassen. Dadurch kann sichergestellt werden, dass die elastischen Eigenschaften des Schichtsystems im Bereich des wenigstens einen abgeschrägten Endes im Wesentlichen durch die zweite Schicht bestimmt werden.

In einer weiteren bevorzugten Ausführungsform werden die erste Schicht aus dem ersten Material und die zweite Schicht aus dem zweiten Material separat gefertigt, wobei das Schichtsystem durch Aufbringen der zweiten Schicht auf die erste Schicht hergestellt wird. Dadurch kann auf besonders einfache Weise sichergestellt werden, dass sich die zweite Schicht, zumindest im Bereich des wenigstens einen abgeschrägten Endes, vollständig entlang der ersten Schicht erstreckt, insbesondere auch an bzw. bis zu deren seitlichen Rändern, d.h. senkrecht zur Längsrichtung über die gesamte Breite der ersten Schicht.

In einer weiteren bevorzugten Ausführungsform wird die zweite Schicht nur in einem Bereich des mindestens einen Endes der ersten Schicht, in welchem das Schichtsystem abgeschrägt wird, verbunden oder aufgebracht. Dadurch kann Material und Gewicht des Schichtsystems bzw. der Rotorblattkomponente eingespart werden. Zudem ist es dadurch möglich, die elastischen Eigenschaften der Rotorblattkomponente in Längsrichtung abschnittsweise zu variieren.

In einer weiteren bevorzugten Ausführungsform wird das Schichtsystem an dem mindestens einen Ende mithilfe des wenigstens einen Trennverfahrens in der Weise abgeschrägt, dass das Ende der über die erste Schicht hinausragenden zweiten Schicht im Wesentlichen eine rechteckige, insbesondere senkrecht zur Längsrichtung verlaufende, Stirnfläche und/oder eine endliche Schichtdicke aufweist. Die Höhe der Seitenfläche bzw. die Dicke der zweiten Schicht ist dabei in bevorzugter Weise wenigstens halb so groß wie die durchschnittliche Dicke der zweiten Schicht, insbesondere wenigstens halb so groß wie die Dicke der zweiten Schicht außerhalb des Bereichs des wenigstens einen abgeschrägten Endes. Das Schichtsystem kann beispielsweise derart abgeschrägt werden, dass die Seitenfläche eine Höhe bzw. die zweite Schicht am abgeschrägten Ende eine Dicke von im Wesentlichen 0,5 mm aufweist. Dadurch kann vermieden werden, dass die Steifigkeit der zweiten Schicht im Bereich, in dem sie über die erste Schicht hinausragt, so gering ist, dass sie beispielsweise bei dem wenigstens einen Trennverfahren und/oder beim Verbinden mehrerer Schichtsysteme beschädigt wird.

In einer weiteren bevorzugten Ausführungsform wird das mindestens eine abgeschrägte Ende des Schichtsystems mit einer dritten Schicht aus einem dritten Material abgedeckt. Vorzugsweise weist das dritte Material einen Elastizitätsmodul, insbesondere in Längsrichtung, auf, der größer ist als der Elastizitätsmodul der zweiten und/oder ersten Schicht. Alternativ kann das dritte Material aber auch gleich dem ersten oder dem zweiten Material sein. Durch die Abdeckung des mindestens einen abgeschrägten Endes durch die dritte Schicht wird die Schälbelastung auf das mindestens eine Ende reduziert sowie ein weiterer Lastpfad für den Kraftfluss aus dem endenden Schichtsystem bereitgestellt.

In einer weiteren bevorzugten Ausführungsform wird das Schichtsystem in der Weise abgeschrägt, dass das Schichtsystem im Bereich des mindestens einen abgeschrägten Endes eine Endfläche, die gegenüber einer Kontaktfläche zwischen der ersten und zweiten Schicht geneigt ist, und zwei einander gegenüberliegende, insbesondere durch die Endfläche verbundenen, Seitenendflächen aufweist, die im Wesentlichen senkrecht zur Kontaktfläche zwischen der ersten und zweiten Schicht verlaufen und derart gegeneinander geneigt sind, dass sie zum Ende des Schichtsystems aufeinander zulaufen. Mit anderen Worten kann das Schichtsystem derart abgeschrägt werden, dass es im Bereich des abgeschrägten Endes spitz zuläuft bzw. einen halbierten Pyramidenstumpf bildet, wobei die die beiden einander gegenüberliegenden Seitenendflächen zusammen mit der Endfläche zumindest einen Teil der Mantelfläche des Pyramidenstumpfes bilden. Dadurch kann sichergestellt werden, dass die elastischen Eigenschaften des Schichtsystems im Bereich des zumindest einen abgeschrägten Endes von der zweiten Schicht bestimmt werden, auch wenn sich die zweite Schicht außerhalb des Bereichs des abgeschrägten Endes nicht an bzw. bis zu den seitlichen Rändern der ersten Schicht, d.h. nicht über die gesamte Breite der ersten Schicht, erstreckt.

In einer weiteren bevorzugten Ausführungsform weist die zweite Schicht eine geringere Dicke auf als die erste Schicht. Dadurch wird ermöglicht, dass die Tragfähigkeit des Schichtsystems im Wesentlichen durch die erste Schicht bestimmt wird. Insbesondere kann so erreicht werden, dass die Tragkraft der Rotorblattkomponente im Wesentlichen vergleichbar mit der Tragkraft konventioneller Rotorblattkomponenten ist.

In einer weiteren bevorzugten Ausführungsform weist die erste Schicht eine Dicke zwischen 1 mm und 10 mm, vorzugsweise zwischen 2 mm und 5 mm, auf. Alternativ oder zusätzlich weist die zweite Schicht eine Dicke zwischen 0.1 mm und 1 mm, vorzugsweise zwischen 0.2 mm und 0.5 mm, auf. Dadurch kann eine ausreichende Tragfähigkeit des Schichtsystems bzw. der Rotorblattkomponente bei gleichzeitig reduziertem Risiko einer Ablösung der Schichten voneinander sichergestellt werden. Insbesondere ist auf diese Weise ein optimales Verhältnis zwischen den Schichtdicke der ersten und zweiten Schicht erreichbar, bei dem die höchste Tragfähigkeit bei reduziertem Ablösungsrisiko vorliegt.

In einer weiteren bevorzugten Ausführungsform weist das erste Material einen Elastizitätsmodul in Längsrichtung zwischen 5·10⁴ N/mm² und 50·10⁴ N/mm², vorzugsweise zwischen 10·10⁴ N/mm² und 30·10⁴ N/mm², auf. Alternativ oder zusätzlich weist das zweite Material einen Elastizitätsmodul in Längsrichtung zwischen 1·10⁴ N/mm² und 6·10⁴ N/mm², vorzugsweise zwischen 4·10⁴ N/mm² und 5·10⁴ N/mm², auf. Das erste Material bzw. die erste Schicht kann beispielsweise Kohlenstofffasern aufweisen und insbesondere als Gewebe oder Gelege ausgebildet sein. Das zweite Material bzw. die zweite Schicht kann beispielsweise Glasfasern aufweisen und insbesondere als Gewebe oder Gelege ausgebildet sein. Es ist auch denkbar, dass das erste und/oder zweite Material Faserbündel (sog. Rovinge) aufweist und die erste bzw. zweite Schicht wenigstens ein solches Faserbündel enthält, insbesondere aus einem oder mehreren solcher Faserbündel gebildet wird.

In einer weiteren bevorzugten Ausführungsform weisen das erste Material und das zweite Material Fasern auf, wobei der Anteil an Fasern, die im Wesentlichen entlang der Längsrichtung verlaufen, im zweiten Material geringer ist als im ersten Material. Dabei kann das erste Material dem zweiten Material ansonsten entsprechen, d.h. das erste Material kann gleich dem zweiten Material sein. Das erste Material bzw. die erste Schicht kann beispielsweise Kohlefasergewebe aufweisen, in dem sich die Kohlenstofffasern im Wesentlichen entlang der Längsrichtung erstrecken. Das zweite Material bzw. die zweite Schicht kann ebenfalls ein Kohlefasergewebe aufweisen, indem sich die Kohlenstofffasern jedoch unter einem Winkel zur Längsrichtung, z.B. unter 45° oder sogar unter 90° bzw. senkrecht, zur Längsrichtung, erstrecken. Dadurch ist eine zuverlässige Reduktion des Elastizitätsmoduls in Längsrichtung beim Übergang von der ersten Schicht in die zweite Schicht erreichbar.

Weitere Vorteile, Merkmale und Anwendungsmöglichkeiten der vorliegenden Erfindung ergeben sich aus der nachfolgenden Beschreibung in Zusammenhang mit den Figuren. Es zeigen:
- Fig. 1: ein Beispiel eines Endes eines Schichtsystems aus einer ersten Schicht und einer zweiten Schicht in einer Seitenansicht;
- Fig. 2: ein Beispiel eines Endes eines Schichtsystems aus einer ersten Schicht und einer zweiten Schicht in einer dreidimensionalen Darstellung; und
- Fig. 3: ein Beispiel eines Endes eines Rotorblattgurts in einer Seitenansicht.

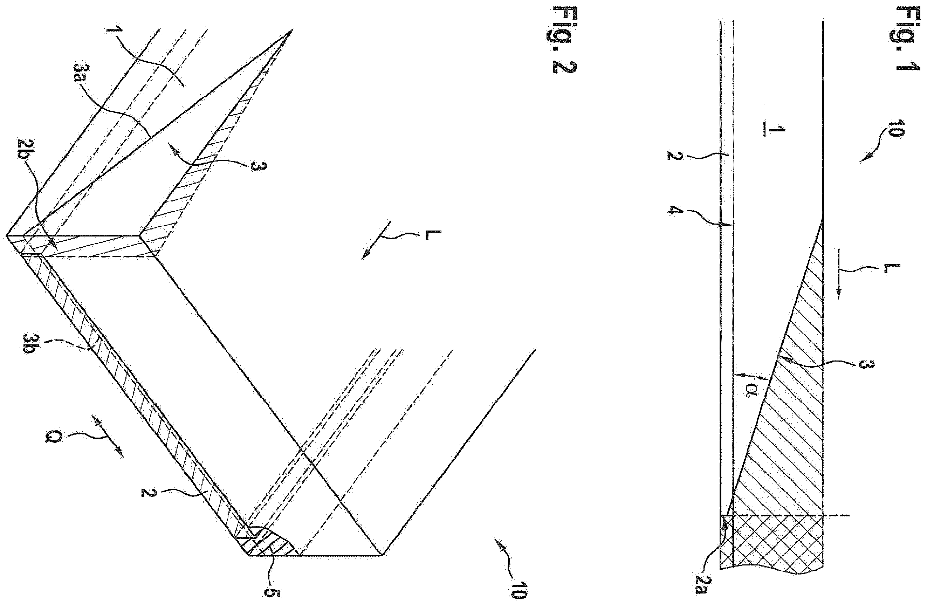

Figur 1 zeigt ein Beispiel eines Endes eines Schichtsystems 10 aus einer ersten Schicht 1 aus einem ersten Material, z.B. Kohlenstofffasern, und einer zweiten Schicht 2 aus einem zweiten Material, z.B. Glasfasern, in einer Seitenansicht. Die zweite Schicht 2 weist dabei in einer Längsrichtung L einen geringeren Elastizitätsmodul auf als die erste Schicht 1. Zudem ist die zweite Schicht wesentlich dünner, insbesondere im Wesentlichen um den Faktor 10, ausgebildet als die erste Schicht.

Das Schichtsystem 10 weist erfindungsgemäß ein abgeschrägtes Ende mit einer Endfläche 3 auf, die gegenüber einer Kontaktfläche 4 zwischen der ersten und zweiten Schicht 1, 2 um einen Abschrägwinkel α geneigt ist. Die Endfläche 4 erstreckt sich dabei über die gesamte Dicke der ersten Schicht 1 und zumindest einen Teil der zweiten Schicht 2, so dass die erste Schicht 1 unter dem Abschrägwinkel α in der gezeigten Seitenansicht spitz zuläuft, während die zweite Schicht 2 ein stumpfes Ende, d.h. ein Ende mit einer senkrecht zur Kontaktfläche 4 orientierten Stirnfläche 2a, aufweist. Dabei ragt die zweiten Schicht 2 über die erste Schicht 1 hinaus.

Am äußersten Ende ist die Dicke des Schichtsystems 10 kleiner als die Dicke der zweiten Schicht 2 außerhalb des abgeschrägten Bereichs, insbesondere im Wesentlichen halb so groß.

Eine solche Geometrie des Endes des Schichtsystems 10 kann z.B. erreicht werden, indem ein Teil des ersten und zweiten Materials durch wenigstens ein Trennverfahren entfernt wird. Das entfernte bzw. zu entfernende Material ist in der vorliegenden Figur 1 durch die Schraffur gekennzeichnet.

Beispielsweise kann das Schichtsystem 10 senkrecht zur Kontaktfläche 4, z.B. entlang der in Figur 1 eingezeichneten gestrichelten Linie, durchgesägt werden, so dass das Ende des Schichtsystems 10 gebildet wird. Anschließend kann die Endfläche 3 etwa durch Fräsen hergestellt werden. Alternativ könnte in dazu umgekehrter Reihenfolge natürlich auch an einem bereits bestehenden Ende des Schichtsystems 10 die Endfläche 3 durch Fräsen hergestellt werden und anschließend die dabei entstandene Spitze der zweiten Schicht 2 abgesägt werden.

Figur 2 zeigt ein zweites Beispiel eines Endes eines Schichtsystems 10 aus einer ersten Schicht 1 aus einem ersten Material und einer zweiten Schicht 2 aus einem zweiten Material in einer dreidimensionalen Darstellung. Das Ende des Schichtsystems 10 ist dabei in der Weise abgeschrägt, dass es eine Endfläche 3 aufweist, die gegenüber einer Kontaktfläche zwischen der ersten und zweiten Schicht 1, 2 (siehe Figur 1) geneigt ist. Dadurch wird ein keilförmig zulaufendes Ende der ersten Schicht 1 gebildet. Die Begrenzung der Endfläche 3 ist in Figur 2 durch die Linien 3a und 3b angedeutet.

Das Schichtsystem 10 wird vorzugsweise mittels eines Strangziehverfahrens hergestellt, so dass die erste Schicht 1 aus entlang einer Längsrichtung L angeordneten Kohlefasern besteht. Im Rahmen des Strangziehverfahrens kann die zweite Schicht 2, z.B. einem Glasfasergelege oder einem Kohlefasergelege oder -gewebe, insbesondere mit unter einem Winkel zur Längsrichtung L angeordneten Fasern, eingearbeitet werden. Insbesondere ist es denkbar, das zweite Material beim Pultrudieren des ersten Materials mit einzuführen, so dass die zweite Schicht 2 von der ersten Schicht 1 seitlich, d.h. in einer Querrichtung Q quer zur Längsrichtung L, eingefasst ist.

Um sicherzustellen, dass diese Einfassungen die elastischen Eigenschaften des Schichtsystems 10 im Bereich des Endes, in dem das Schichtsystem 10 abgeschrägt ist, nicht beeinflussen, kann das Schichtsystem 10 auch seitlich abgeschrägt werden, z.B. indem ein keilförmiger Teil am seitlichen Rand des Schichtsystems 10 abgetrennt wird. Dadurch kann sich die zweite Schicht 2 im Bereich des Endes des Schichtsystems 10 durchgängig von einer Seite des Schichtsystems 10 zur gegenüberliegenden Seite in der Querrichtung Q erstrecken. Dieser Fall ist in Figur 2 auf der dem Betrachter zugewandten linken Seite des Schichtsystems 10 gezeigt. Bei der seitlichen Abschrägung wird dabei eine Seitenendfläche 2b erzeugt, so dass die elastischen Eigenschaften des Schichtsystems 10 zumindest im Bereich, in dem die zweite Schicht 2 über die erste Schicht 1 hinausragt (siehe Figur 1), im Wesentlichen durch die elastischen Eigenschaften der zweiten Schicht 2 in diesem Bereich bestimmt sind.

Alternativ ist es auch möglich, bereits beim Strangziehen des Schichtsystems 10 sicherzustellen, dass sich die zweite Schicht 2 durchgehend von einer Seite des Schichtsystems 10 bis zur gegenüberliegenden Seite entlang der Querrichtung Q erstreckt, etwa indem beim Strangziehen des ersten Materials an den seitlichen Enden das zweite Material in Form eines Faserbündels (sog. Roving) eingelegt wird. Dadurch entstehen längliche, insbesondere streifenförmige, Bereiche 5 von geringer Steifigkeit, welche sich seitlich der zweiten Schicht 2 entlang der Längsrichtung L erstrecken und die zweite Schicht 2 seitlich einfassen. Dieser Fall ist in Figur 2 auf der dem Betrachter abgewandten rechten Seite der Schichtsystems 10 gezeigt.

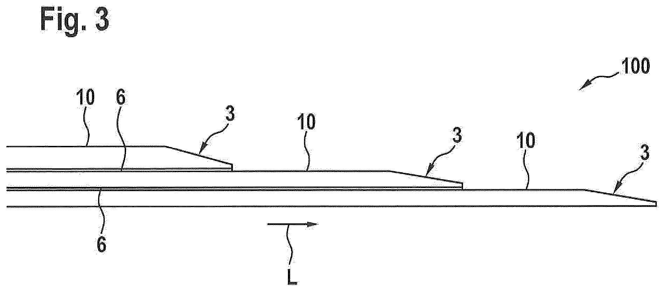

Figur 3 zeigt einen Rotorblattgurt 100, der aus drei übereinander geschichteten und Schichtsystemen 10 gebildet ist, in einer Seitenansicht. Die Schichtsysteme 10 sind dabei in der Weise angeordnet, dass eine zweite Schicht eines Schichtsystems 10 aus einem zweiten Material jeweils einer ersten Schicht eines benachbarten Schichtsystems 10 aus einem ersten Material zugewandt ist. Die Schichtsysteme 10 sind über zwischen den Schichtsystemen 10 liegende Klebeschichten 6 miteinander verklebt.

Die Schichtsysteme 10 weisen abgeschrägte Enden auf, die entlang einer Längsrichtung L der Schichtsysteme 10 gestaffelt angeordnet sind. Dadurch ergibt sich ein pyramidenförmiger Aufbau des Rotorblattgurts 100. Dabei können durch das Abschrägen der Enden entstandene Endflächen 3 in der Weise ausgerichtet sein, dass die Schichtsysteme 10 zum Ende des Rotorblattgurts 100 abgeflachte Stufen bilden.

## Patentansprüche

1. Verfahren zum Herstellen einer Rotorblattkomponente, insbesondere eines Rotorblattgurts (100), für ein Rotorblatt einer Windenergieanlage, wobei
- ein Schichtsystem (10) aus einer ersten Schicht (1) aus einem ersten Material und einer zweiten Schicht (2) aus einem zweiten Material hergestellt wird, wobei sich die zweite Schicht (2) zumindest abschnittsweise entlang einer Längsrichtung (L) der ersten Schicht (1) erstreckt und das zweite Material ein kleineres Elastizitätsmodul in Längsrichtung (L) aufweist als das erste Material,
- das Schichtsystem (10) an mindestens einem Ende mithilfe wenigstens eines Trennverfahrens in der Weise abgeschrägt wird, dass die zweite Schicht (2) an dem mindestens einen Ende des Schichtsystems (10) über die erste Schicht (1) hinausragt, und
- das Schichtsystem (10) mit wenigstens einem anderen Schichtsystem (10) zur Rotorblattkomponente verbunden wird,
**dadurch gekennzeichnet, dass**
das Schichtsystem (10) an dem mindestens einen Ende mithilfe des wenigstens einen Trennverfahrens in der Weise abgeschrägt wird, dass ein Teil des ersten und zweiten Materials entfernt wird, so dass das Schichtsystem (10) ein abgeschrägtes Ende mit einer Endfläche (3) aufweist, die gegenüber einer Kontaktfläche (4) zwischen der ersten und zweiten Schicht (1, 2) um einen Abschrägwinkel (α) geneigt ist und sich über die gesamte Dicke der ersten Schicht (1) und zumindest einen Teil der zweiten Schicht (2) erstreckt, so dass die erste Schicht (1) unter dem Abschrägwinkel (α) spitz zuläuft, während die über die erste Schicht (1) hinausragende zweite Schicht (2) ein stumpfes Ende mit einer senkrecht zur Kontaktfläche (4) orientierten Stirnfläche (2a) aufweist.

2. Verfahren nach Anspruch 1, wobei das Schichtsystem (10) hergestellt wird, indem das zweite Material beim Fertigen der ersten Schicht (1) aus dem ersten Material in eine Teilschicht des ersten Materials mit eingearbeitet wird und dabei die zweite Schicht (2) bildet.

3. Verfahren nach Anspruch 1, wobei die erste Schicht (1) aus dem ersten Material und die zweite Schicht (2) aus dem zweiten Material separat gefertigt werden und das Schichtsystem (10) durch Aufbringen der zweiten Schicht (2) auf die erste Schicht (1) hergestellt wird.

4. Verfahren nach einem der Ansprüche 2 oder 3, wobei die zweite Schicht (2) nur in einem Bereich des mindestens einen Endes der ersten Schicht (1), in welchem das Schichtsystem (10) abgeschrägt wird, eingearbeitet bzw. aufgebracht wird.

5. Verfahren nach einem der vorangehenden Ansprüche, wobei die Stirnfläche (2a) rechteckig ist.

6. Verfahren nach einem der vorangehenden Ansprüche, wobei die Höhe der Stirnfläche (2a) wenigstens halb so groß ist wie die Dicke der zweiten Schicht (2) außerhalb des Bereichs des wenigstens einen abgeschrägten Endes.

7. Verfahren nach einem der vorangehenden Ansprüche, wobei das mindestens eine abgeschrägte Ende des Schichtsystems (10) mit einer dritten Schicht aus einem dritten Material abgedeckt wird.

8. Verfahren nach einem der vorangehenden Ansprüche, wobei das Schichtsystem (10) in der Weise abgeschrägt wird, dass das Schichtsystem (10) im Bereich des mindestens einen abgeschrägten Endes eine Endfläche (3), die gegenüber einer Kontaktfläche (4) zwischen der ersten und zweiten Schicht (1, 2) geneigt ist, und zwei einander gegenüberliegende Seitenendflächen (2b) aufweist, die im Wesentlichen senkrecht zur Kontaktfläche (4) zwischen der ersten und zweiten Schicht (1, 2) verlaufen und derart gegeneinander geneigt sind, dass sie zum Ende des Schichtsystems (10) aufeinander zulaufen.

9. Rotorblattkomponente, insbesondere Rotorblattgurt (100), für ein Rotorblatt einer Windenergieanlage, mit
- wenigstens einem Schichtsystem (10) aus einer ersten Schicht (1) aus einem ersten Material und einer zweiten Schicht (2) aus einem zweiten Material, wobei die zweite Schicht (2) zumindest abschnittsweise entlang einer Längsrichtung (L) auf der ersten Schicht (1) aufgebracht ist und das zweite Material einen kleineren Elastizitätsmodul in Längsrichtung (L) aufweist als das erste Material und das Schichtsystem (10) an mindestens einem Ende in der Weise abgeschrägt ist, dass die zweite Schicht (2) an dem mindestens einen Ende des Schichtsystems (10) über die erste Schicht (1) hinausragt, und
- wenigstens einem anderen Schichtsystem (10), mit welchem das wenigstens eine Schichtsystem (10) zur Rotorblattkomponente verbunden ist
**dadurch gekennzeichnet, dass**
das Schichtsystem (10) an dem mindestens einen Ende in der Weise abgeschrägt ist, dass ein Teil des ersten und zweiten Materials entfernt ist, so dass das Schichtsystem (10) ein abgeschrägtes Ende mit einer Endfläche (3) aufweist, die gegenüber einer Kontaktfläche (4) zwischen der ersten und zweiten Schicht (1, 2) um einen Abschrägwinkel (α) geneigt ist und sich über die gesamte Dicke der ersten Schicht (1) und zumindest einen Teil der zweiten Schicht (2) erstreckt, so dass die erste Schicht (1) unter dem Abschrägwinkel (α) spitz zuläuft, während die über die erste Schicht (1) hinausragende zweite Schicht (2) ein stumpfes Ende mit einer senkrecht zur Kontaktfläche (4) orientierten Stirnfläche (2a) aufweist.

10. Rotorblattkomponente nach Anspruch 9, wobei die zweite Schicht (2) eine geringere Dicke aufweist als die erste Schicht (1).

11. Rotorblattkomponente nach einem der Ansprüche 9 oder 10, wobei die erste Schicht (1) eine Dicke zwischen 1 mm und 10 mm, vorzugsweise zwischen 2 mm und 5 mm, aufweist und/oder die zweite Schicht (2) eine Dicke zwischen 0.1 mm und 1 mm, vorzugsweise zwischen 0.2 mm und 0.5 mm, aufweist.

12. Rotorblattkomponente nach einem der Ansprüche 9 bis 11, wobei das erste Material einen Elastizitätsmodul in Längsrichtung (L) zwischen 5·10⁴ N/mm² und 50·10⁴ N/mm², vorzugsweise zwischen 10·10⁴ N/mm² und 30·10⁴ N/mm², aufweist und/oder das zweite Material einen Elastizitätsmodul in Längsrichtung (L) zwischen 1·10⁴ N/mm² und 6·10⁴ N/mm², vorzugsweise zwischen 4·10⁴ N/mm² und 5·10⁴ N/mm², aufweist.

13. Rotorblattkomponente nach einem der Ansprüche 9 bis 12, wobei das erste Material und das zweite Material Fasern aufweisen und der Anteil an Fasern, die im Wesentlichen entlang der Längsrichtung (L) verlaufen, im zweiten Material geringer ist als im ersten Material.

14. Windenergieanlage mit mindestens einem Rotorblatt, welches eine mit dem Verfahren nach einem der Ansprüche 1 bis 8 hergestellte Rotorblattkomponente und/oder eine Rotorblattkomponente nach einem der Ansprüche 9 bis 13 aufweist.

## Claims

1. A method of manufacturing a rotor blade component, in particular a rotor blade spar cap (100), for a rotor blade of a wind energy installation, wherein
- a layer system (10) is manufactured from a first layer (1) of a first material and a second layer (2) of a second material, wherein the second layer (2) extends at least partially along a longitudinal direction (L) of the first layer (1) and the second material has a smaller modulus of elasticity in the longitudinal direction (L) than the first material,
- the layer system (10) is bevelled at least at one end with the aid of at least one separation process in such a way that the second layer (2) projects beyond the first layer (1) at the at least one end of the layer system (10), and
- the layer system (10) is connected to at least one further layer system (10) so as to form the rotor blade component
**characterized in that**
the layer system (10) is bevelled at the at least one end with the aid of the at least one separation process in such a way that a part of the first and second materials is removed, so that the layer system (10) has a bevelled end with an end surface (3) which is inclined by a bevel angle (α) with respect to a contact surface (4) between the first and second layers (1, 2) and extends over the entire thickness of the first layer (1) and at least part of the second layer (2), so that the first layer (1) tapers to a point at the bevel angle (α), while the second layer (2) which projects beyond the first layer (1) has a blunt end with an end face (2a) which is oriented perpendicular to the contact surface (4).

2. The method according to claim 1, wherein the layer system (10) is manufactured by incorporating the second material into a partial layer of the first material during the course of the manufacture of the first layer (1) from the first material, and thereby forming the second layer (2).

3. The method according to claim 1, wherein the first layer (1) is manufactured from the first material separately from the second layer (2) being manufactured from the second material, and the layer system (10) is manufactured by applying the second layer (2) onto the first layer (1).

4. The method according to any one of the claims 2 or 3, wherein the second layer (2) is incorporated or applied only in a region of the at least one end of the first layer (1) in which the layer system (10) is bevelled.

5. The method according to any one of the preceding claims, wherein the end face (2a) is rectangular.

6. The method according to any one of the preceding claims, wherein the height of the end face (2a) is at least half as great as the thickness of the second layer (2) outside of the region of the at least one bevelled end.

7. The method according to any one of the preceding claims, wherein the at least one bevelled end of the layer system (10) is covered with a third layer of a third material.

8. The method according to any one of the preceding claims, wherein the layer system (10) is bevelled in such a way that, in the region of the at least one bevelled end, the layer system (10) has an end face (3) which is inclined with respect to a contact surface (4) between the first and the second layer (1, 2), and two side end faces (2b) which are opposite to one another, which run substantially perpendicular to the contact face (4) between the first and the second layer (1, 2) and are inclined with respect to one another in such a way that they taper towards the end of the layer system (10).

9. A rotor blade component, in particular a rotor blade spar cap (100), for a rotor blade of a wind energy installation, wherein the rotor blade component comprises
- at least one layer system (10) from a first layer (1) of a first material and a second layer (2) of a second material, wherein the second layer (2) is at least partially applied to the first layer (1) along a longitudinal direction (L), and the second material has a smaller modulus of elasticity in the longitudinal direction (L) than the first material, and the layer system (10) is bevelled at least at one end in such a way that the second layer (2) projects beyond the first layer (1) at the at least one end of the layer system (10), and
- at least one further layer system (10) to which the at least one layer system (10) is connected so as to form the rotor blade component,
**characterized in that**
the layer system (10) is bevelled at the at least one end in such a way that a part of the first and second materials is removed, so that the layer system (10) has a bevelled end with an end surface (3) which is inclined by a bevel angle (α) with respect to a contact surface (4) between the first and second layers (1, 2) and extends over the entire thickness of the first layer (1) and at least part of the second layer (2), so that the first layer (1) tapers to a point at the bevel angle (α), while the second layer (2) which projects beyond the first layer (1) has a blunt end with an end face (2a) which is oriented perpendicular to the contact surface (4).

10. The rotor blade component according to claim 9, wherein the second layer (2) has a smaller thickness than the first layer (1).

11. The rotor blade component according to any one of the claims 9 or 10, wherein the first layer (1) has a thickness of between 1 mm and 10 mm, preferably between 2 mm and 5 mm, and / or the second layer (2) has a thickness of between 0.1 mm and 1 mm, preferably between 0.2 mm and 0.5 mm.

12. The rotor blade component according to any one of the claims 9 to 11, wherein the first material has a modulus of elasticity in the longitudinal direction (L) of between 5 × 10⁴ N/mm² and 50 × 10⁴ N/mm², preferably between 10 × 10⁴ N/mm² and 30 × 10⁴ N/mm², and / or the second material has a modulus of elasticity in the longitudinal direction (L) of between 1 × 10⁴ N/mm² and 6 × 10⁴ N/mm², preferably between 4 × 10⁴ N/mm² and 5 × 10⁴ N/mm².

13. The rotor blade component according to any one of the claims 9 to 12, wherein the first material and the second material comprises fibres and wherein the proportion of fibres which extend substantially along the longitudinal direction (L) is smaller in the second material than in the first material.

14. A wind energy installation comprising at least one rotor blade which comprises a rotor blade component which has been manufactured using the method according to any one of the claims 1 to 8 and / or which comprises a rotor blade component according to any one of the claims 9 to 13.

## Revendications

1. Procédé pour fabriquer un composant de pale de rotor, en particulier une semelle de longeron de pale de rotor (100), pour une pale de rotor d'une éolienne, dans lequel
- un système de couches (10) est obtenu à partir d'une première couche (1) composée d'un premier matériau et d'une deuxième couche (2) composée d'un deuxième matériau, dans lequel la deuxième couche (2) s'étend au moins sur certaines parties le long d'une direction longitudinale (L) de la première couche (1) et le deuxième matériau présente un module d'élasticité dans la direction longitudinale (L) plus petit que le premier matériau,
- le système de couches (10) est biseauté sur au moins une extrémité à l'aide d'au moins un procédé de séparation de manière à ce que la deuxième couche (2) dépasse de la première couche (1) sur l'au moins une extrémité du système de couches (10), et
- le système de couches (10) est relié à l'au moins un autre système de couches (10) en le composant de pale de rotor, **caractérisé en ce que**
le système de couches (10) est biseauté sur l'au moins une extrémité à l'aide de l'au moins un procédé de séparation de manière de manière à ce qu'une partie du premier et deuxième matériau soit enlevée, de sorte que le système de couches (10) présente une extrémité biseautée avec une surface d'extrémité (3) qui est inclinée d'un angle de biseau (α) par rapport à une surface de contact (4) entre la première et deuxième couche (1, 2) et s'étende sur toute l'épaisseur de la première couche (1) et au moins une partie de la deuxième couche (2), de sorte que la première couche (1) se termine en pointe sous l'angle de chanfrein (α), tandis que la deuxième couche (2) dépassant de la première couche (1) présente une extrémité émoussée avec une surface frontale (2a) orientée perpendiculairement à la surface de contact (4).

2. Procédé selon la revendication 1, dans lequel le système de couches (10) est obtenu du fait que le deuxième matériau est incorporé dans une sous-couche du premier matériau lors de la fabrication de la première couche (1) composé du premier matériau et forme ainsi la deuxième couche (2).

3. Procédé selon la revendication 1, dans lequel la première couche (1) composée du premier matériau et la deuxième couche (2) composée du deuxième matériau sont fabriquées séparément et le système de couches (10) est obtenu par application de la deuxième couche (2) sur la première couche (1).

4. Procédé selon l'une quelconque des revendications 2 ou 3, dans lequel la deuxième couche (2) est incorporée ou appliquée uniquement dans une zone de l'au moins une extrémité de la première couche (1) dans laquelle le système de couches (10) est biseauté.

5. Procédé selon l'une quelconque des revendications précédentes, dans lequel la surface frontale (2a) est rectangulaire.

6. Procédé selon l'une quelconque des revendications précédentes, dans lequel la hauteur de la surface frontale (2a) est au moins deux fois plus petite que l'épaisseur de la deuxième couche (2) en dehors de la zone de l'au moins une extrémité biseautée.

7. Procédé selon l'une quelconque des revendications précédentes, dans lequel l'au moins une extrémité biseautée du système de couches (10) est recouverte d'une troisième couche composée d'un troisième matériau.

8. Procédé selon l'une quelconque des revendications précédentes, dans lequel le système de couches (10) est biseauté de manière à ce que le système de couches (10) présente, dans la zone de l'au moins une extrémité biseautée, une surface d'extrémité (3) qui par rapport à une surface de contact (4) entre la première et deuxième couche (1, 2) est inclinée et présente deux surfaces d'extrémité latérales (2b) opposées qui s'étendent de manière sensiblement perpendiculaire à la surface de contact (4) entre la première et deuxième couche (1, 2) et sont inclinées l'une vers l'autre de sorte qu'elles convergent vers l'extrémité du système de couches (10).

9. Composant de pale de rotor, en particulier semelle de longeron de pale de rotor (100), pour une pale de rotor d'une éolienne, avec
- au moins un système de couches (10) composé d'une première couche (1) composée d'un premier matériau et d'une deuxième couche (2) composée d'un deuxième matériau, dans lequel la deuxième
couche (2) est appliquée sur la première couche (1) au moins sur certaines parties le long d'une direction longitudinale (L) et le deuxième matériau présente un module d'élasticité dans la direction longitudinale (L) plus petit que le premier matériau et le système de couches (10) est biseauté sur au moins une extrémité de manière à ce que la deuxième couche (2) dépasse de la première couche (1) sur au moins une extrémité du système de couches (10), et
- au moins un autre système de couches (10) auquel l'au moins un système de couches (10) est relié en le composant de pale de rotor
**caractérisé en ce que**
le système de couches (10) est biseauté sur l'au moins une extrémité de manière à ce qu'une partie du premier et deuxième matériau soit enlevée, de sorte que le système de couches (10) présente une extrémité biseautée avec une surface d'extrémité (3) qui est inclinée d'un angle de biseau (α) par rapport à une surface de contact (4) entre la première et deuxième couche (1, 2) et s'étend sur toute l'épaisseur de la première couche (1) et au moins une partie de la deuxième couche (2), de sorte que la première couche (1) se termine en pointe sous l'angle de chanfrein (α), tandis que la deuxième couche (2) dépassant de la première couche (1) présente une extrémité émoussée avec une surface frontale (2a) orientée perpendiculairement à la surface de contact (4).

10. Composant de pale de rotor selon la revendication 9, dans lequel la deuxième couche (2) présente une épaisseur plus petite que la première couche (1).

11. Composant de pale de rotor selon l'une quelconque des revendications 9 ou 10, dans lequel la première couche (1) présente une épaisseur comprise entre 1 mm et 10 mm, de préférence entre 2 mm et 5 mm, et/ou la deuxième couche (2) présente une épaisseur comprise entre 0,1 mm et 1 mm, de préférence entre 0,2 mm et 0,5 mm.

12. Composant de pale de rotor selon l'une quelconque des revendications 9 à 11, dans lequel le premier matériau présente un module d'élasticité dans la direction longitudinale (L) compris entre 5·10⁴ N/mm² et 50·10⁴ N/mm², de préférence entre 10·10⁴ N/mm² et 30·10⁴ N/mm², et/ou le deuxième matériau présente un module d'élasticité dans la direction longitudinale (L) compris entre 1·10⁴ N/mm² et 6·10⁴ N/mm², de préférence entre 4·10⁴ N/mm² et 5·10⁴ N/mm².

13. Composant de pale de rotor selon l'une quelconque des revendications 9 à 12, dans lequel le premier matériau et le deuxième matériau présentent des fibres et la proportion de fibres qui s'étendent sensiblement le long de la direction longitudinale (L) est plus petite dans le deuxième matériau que dans le premier matériau.

14. Éolienne avec au moins une pale de rotor, laquelle présente un composant de pale de rotor obtenu avec le procédé selon l'une quelconque des revendications 1 à 8 et/ou un composant de pale de rotor selon l'une quelconque des revendications 9 à 13.
